# EUROPEAN PATENT APPLICATION

(11) **EP 4 769 166 A1**
(43) Date of publication of application: **01.07.2026**
(21) Application number: 24307341.8
(22) Date of filing: 31.12.2024
(51) Int. Cl.: G06F 15/167

(54) **METHODS FOR DATA COMMUNICATION AND APPARATUSES FOR IMPLEMENTING THE SAME**

(71) Applicant: Schneider Toshiba Inverter Europe SAS, 27120 Pacy-sur-Eure (FR)
(72) Inventor: KHANOUS, Omar, 27120 PACY SUR EURE (FR); CHAUVINEAU, Guillaume, 27120 PACY SUR EURE (FR); TFAILY, Ali, 92500 RUEIL MALMAISON (FR); JEBAI, Al Kassem, 27200 VERNON (FR)
(74) Representative: Plasseraud IP

(57) **Abstract**

A method for data communication between a first processor and a second processor is proposed. The method comprises transmitting data packets to the second processor; upon determining that transmission of the data packets is to be stopped, stopping data transmission for a first predetermined duration; and upon expiry of the first predetermined duration, transmitting to the second processor one or more subsequent data packets.

## Description

The present disclosure relates to the field of data communication between processing apparatuses, in particular for data communication between two processors in a computing environment.

Electric motor drives (e.g. electric (e.g. induction) motor drives) are typically designed to operate with any electrical (e.g. induction) motor, based on driving parameters which are determined during a measuring phase sometimes referred to as a "motor tuning" phase.

A motor drive is typically configured to, based on an electrical signal received from a supply network (e.g. an energy supplier network), generate a setpoint signal which is fed to the motor to which the motor drive is coupled for controlling the operations thereof.

Electric motor drives may be configured with a plurality of processing apparatuses (e.g. processors), and with a data communication interface for data transmission to/reception from another device. Such configuration requires inter-processor data communication, whether in-between processors of a same device (e.g. an electric motor drive) or in-between processors of different devices, for example in an industrial network.

However, industrial networks have specific constraints, such as the enforcement of strict temporal properties of the data transmission, which may not be accounted for by conventional data communication protocols usable for inter-processor communication.

There is therefore a need for providing improved inter-processor data communication schemes and apparatuses implementing the same that address the above-described drawbacks and shortcomings of the conventional technology in the art.

There is also a need for providing improved data communication schemes and apparatuses implementing the same that can be used for inter-processor data communication, in particular in an industrial network environment.

It is an object of the present subject disclosure to provide improved data communication schemes and apparatuses implementing the same.

Another object of the present subject disclosure is to provide data communication schemes and apparatuses implementing the same for alleviating the above-described drawbacks and shortcomings of conventional inter-processor data communication schemes.

Yet another object of the present subject disclosure is to provide inter-processor data communication schemes and apparatuses implementing the same for alleviating the above-described drawbacks and shortcomings of conventional inter-processor data communication schemes.

Yet another object of the present subject disclosure is to provide data communication schemes and apparatuses implementing the same that can be used for inter-processor data communication, in particular in an industrial network environment.

To achieve these objects and other advantages and in accordance with the purpose of the present subject disclosure, as embodied and broadly described herein, according to one aspect of the present subject disclosure a method for data communication between a first (sender) processor and a third (recipient) processor is proposed. The method comprises, by the first (sender) processor: transmitting data (packets) to the third (recipient) processor (through a second (intermediary) processor in a chain of processors between the first and third processors); upon determining that transmission of data (packets) is to be stopped, stopping data transmission to the third (recipient) processor (through the second (intermediary) processor) for a first predetermined duration; and upon expiry of the first predetermined duration, transmitting to the third (recipient) processor (through the second processor) one or more subsequent data (packets).

According to another aspect of the present subject disclosure a method for data communication between a first (sender) processor and a second processor is proposed. The method comprises by the first (sender) processor: transmitting data packets to the second processor; upon determining that transmission of the data packets is to be stopped, stopping data transmission for a first predetermined duration; and upon expiry of the first predetermined duration, transmitting to the second processor one or more subsequent data packets.

The proposed inter-processor data communication is advantageously suitable for implementing data communication between a sender processor and a recipient processor through one or more intermediate processors, where at least one of the intermediate processors has limitations in terms of resources and/or capabilities.

The proposed scheme is advantageously usable with any suitable data communication protocol that may be used by the sender processor and the recipient processor for data communication. Advantageously, the proposed method provides a scheme for implementation by the sender processor (and therefore transparent to the recipient processor), that can be used to accommodate the data communication with the recipient processor to use cases where a chain of processors is used for data transmission from the sender processor to the recipient processor, with one or more intermediary processors which may have very limited resources/capabilities. In particular, the proposed scheme is advantageously usable for inter-processor data communication using a chain of processors for data communication from a sender processor to a recipient processor through one or more intermediary processors, in particular in cases where at least one intermediary processor may not be configured to manage data reception and transmission according to the protocol used by the sender processor and the recipient processor.

Embodiments of the proposed scheme may be implemented in a first processor configured to transmit data to another processor (a second processor), which may be any processor of a chain of processors for data transmission from the first processor to a recipient processor.

In one or more embodiments, the proposed method may further comprise: upon transmitting the one or more subsequent data (packets), stopping data transmission to the third (recipient) processor for a second predetermined duration.

In one or more embodiments, the transmission of the data may be performed (substantially) continuously, so that the data may be streamed by the first (sender) processor to the third (recipient) processor, for example at a streaming rate corresponding to the execution frequency of a (transmission) task executed by the first (sender) processor.

In one or more embodiments, the transmitting data to the third (recipient) processor may comprise transmitting a stream of P data packets to the second processor, wherein *P* ≥ 1. In some embodiments, the P data packets of the stream may be streamed to the third (recipient) processor, for example at a streaming rate corresponding to the execution frequency of a (transmission) task executed by the first (sender) processor.

In some embodiments, determining that the transmission of data is to be stopped may comprise determining that the transmission of the P data packets of the stream is complete. In such embodiments, further to stopping the transmission of data to the third (recipient) processor for the first predetermined duration, the first (sender) processor may transmit to the third (recipient) processor subsequent data that comprises an end of transmission signaling packet (e.g. according to a data communication protocol used by the first (sender) processor to inform the third processor of the completion of transmission of the stream of P data packets).

In some embodiments, the proposed method may further comprise: upon transmitting the one or more subsequent data (packets), starting a transmitter stop transmission timer. In some embodiments, the transmitter stop transmission timer may be configured to expire at the end of the second predetermined duration. In some embodiments, data transmission to the third processor may be stopped (interrupted) while the transmitter stop transmission timer is running.

In one or more embodiments, the proposed method may further comprise: upon determining that transmission of the data packets is to be stopped, starting a transmitter end of transmission timer. In some embodiments, the transmitter end of transmission timer may be configured to expire at the end of the first predetermined duration. In some embodiments, data transmission to the third processor may be stopped (interrupted) while the transmitter end of transmission timer is running. In some embodiments, an end of transmission signaling packet (according to a data communication protocol used by the first (sender) processor and the third (recipient) processor) may be transmitted to the third processor upon expiry of the transmitter end of transmission timer.

In one or more embodiments, transmitting data to the third (recipient) processor may comprise writing the data to be transmitted to the third (recipient) processor in a memory shared between the first processor and a second processor (located in-between the first processor and the third processor in a chain of processors through which data is transmitted from the first processor to the third processor).

According to another aspect of the present subject disclosure, a method for data processing is proposed, which is implemented by a second (intermediary) processor, and comprises: receiving, for example from a first (sender) processor, data (e.g. one or more data packets); storing the received data (e.g. the received one or more data packets) in a memory coupled to the second processor; upon determining that no further data was received (for example from the first processor) during a third predetermined duration, transmitting the data (e.g. one or more data packets) stored in the memory to a third processor.

In one or more embodiments, the proposed method may further comprise, by the second processor: upon determining that data is no longer being received (from the first processor), starting a receiver end of transmission timer. In some embodiments, the receiver end of transmission timer may be configured to expire at the end of the third predetermined duration.

In one or more embodiments, the proposed method may further comprise, by the second processor: upon transmitting the data stored in the memory to the third processor, receiving (for example from the first processor) subsequent data (e.g. one or more subsequent data packets), and storing the received subsequent data (e.g. the received one or more subsequent data packets) in the memory. In some embodiments, the proposed method may further comprise, by the second processor: upon (based on) determining that no data was received (for example from the first processor) during a fourth predetermined duration, transmitting the subsequent data (e.g. the one or more subsequent data packets) stored in the memory to the third processor.

In one or more embodiments, the proposed method may further comprise, by the second processor: further to receiving the data, upon determining that data is no longer being received by the second processor, starting a first receiver stop transmission timer. In some embodiments, the first receiver stop transmission timer may be configured to expire at the end of the third predetermined duration.

In one or more embodiments, the proposed method may further comprise, by the second processor: further to receiving the subsequent data, upon determining that data is no longer being received by the second processor, starting a second receiver stop transmission timer. In some embodiments, the second receiver stop transmission timer may be configured to expire at the end of the fourth predetermined duration.

In some embodiments, receiving data (for example from the first processor) may comprise, by the second processor, reading the data received (for example from the first processor) from a memory shared between the second processor and a processor preceding the second processor in a chain of processors.

In one or more embodiments, the proposed method may further comprise, by the second processor: receiving data (for example from the first processor), storing data received (for example from the first processor) in the memory, and upon determining that the memory is full to a predetermined extent, transmitting the data stored in the memory to a third processor. In some embodiments, the second processor may apply a traffic management policy according to which the data stored in the memory may be transmitted under the condition that the memory is full to a predetermined extent. In such embodiments, the traffic management policy configured at the second processor may include an additional rule according to which the data stored in the memory is transmitted to the third processor upon determining that no further data was received during the third predetermined duration even though the memory is not full to the predetermined extent. In some embodiments, the determination that no further data was received during the third predetermined duration may trigger (force) transmission of the data stored in the memory, irrespective of whether or not the memory is full to a predetermined extent. For example, in some embodiments, the second (intermediary) processor may be configured with a traffic management policy which includes a first data transmission rule according to which the second processor waits for the memory to be full to a predefined extent before transmitting the data stored therein, and a second data transmission rule transmit the data stored in the memory upon determining that no further data was received during the third predetermined duration (even though the memory may not be full to the predetermined extent).

In one or more embodiments, the first processor and the second processor may be processors of a chain of processors for data transmission from a sender processor being the first processor of the chain of processors to a recipient processor being the last processor of the chain of processors. In some embodiments, the second processor may be an intermediary processor of the chain of processors through which data is transmitted from the sender processor to the recipient processor. In some embodiments, the first processor may be a processor (immediately) preceding the second processor in the chain of processors.

In one or more embodiments, the first processor and the second processor may be processors of a chain of processors for data transmission from the first processor operating as a sender processor to a recipient processor being the last processor of the chain of processors. In some embodiments, the second processor may be an intermediary processor of the chain of processors through which data may be transmitted from the sender processor to the recipient processor.

In one or more embodiments, the first processor and the second processor may be processors of a chain of processors for data transmission from the first processor operating as a sender processor being the first processor of the chain of processors to from the second processor operating as a recipient processor being the last processor of the chain of processors.

In one or more embodiments, the second processor and the third processor may be processors of a chain of processors for data transmission from a sender processor to a recipient processor, and the second processor may be an intermediary processor of this chain of processors through which data is transmitted from the sender processor to the recipient processor.

In one or more embodiments, the first processor and the third processor may be processors of a chain of processors for data transmission from the first processor operating as a sender processor to the third processor operating as a recipient processor being the last processor of the chain of processors, and data transmitted from the first processor to the third processor may be transmitted through one or more intermediary processors of the chain of processors.

According to yet another aspect of the present subject disclosure, an apparatus comprising a processor, and a memory operatively coupled to the processor, wherein the apparatus is configured to perform a method as proposed in the present subject disclosure.

According to yet another aspect of the present subject disclosure, a (in some embodiments non-transitory) computer-readable medium encoded with executable instructions which, when executed, causes an apparatus comprising a processor operatively coupled with a memory, to perform a method as proposed in the present subject disclosure, is proposed.

According to yet another aspect of the present subject disclosure, a computer program product comprising computer program code tangibly embodied in a computer readable medium, said computer program code comprising instructions to, when provided to a computer system and executed, cause said computer to perform a method as proposed in the present subject disclosure, is proposed. According to yet another aspect of the present subject disclosure, a data set representing, for example through compression or encoding, a computer program as proposed herein, is proposed.

It should be appreciated that the present invention can be implemented and utilized in numerous ways, including without limitation as a process, an apparatus, a system, a device, and as a method for applications now known and later developed. These and other unique features of the system disclosed herein will become more readily apparent from the following description and the accompanying drawings.

### Brief description of the drawings

The present subject disclosure will be better understood and its numerous objects and advantages will become more apparent to those skilled in the art by reference to the following drawings, in conjunction with the accompanying specification, in which:
Figure 1a is a schematic diagram illustrating an exemplary computing environment, in accordance with one or more embodiments;
Figure 1b is a schematic diagram illustrating an exemplary computing environment, in accordance with one or more embodiments;
Figure 2 is a block diagram illustrating an exemplary data packet, in accordance with one or more embodiments;
Figure 3a is a block diagram illustrating an exemplary start data packet, in accordance with one or more embodiments;
Figure 3b is a block diagram illustrating an exemplary stop data packet, in accordance with one or more embodiments;
Figure 4 is a flow chart illustrating an exemplary transmission of a data stream from a sender processor to a recipient processor through an intermediary processor, in accordance with one or more embodiments;
Figure 5a is a block diagram illustrating a proposed method for data communication by a sender processor of a chain of processors, in accordance with one or more embodiments;
Figure 5b is a block diagram illustrating a proposed method for data communication by an intermediate processor of a chain of processors, in accordance with one or more embodiments;
Figure 6 is a flow chart illustrating an exemplary transmission of a data stream from a sender processor to a recipient processor through an intermediary processor, in accordance with one or more embodiments; and
Figure 7 is a diagram illustrating an exemplary architecture of a computer system for implementing a proposed method, in accordance with one or more embodiments.

### Description of embodiments

The advantages, and other features of the components disclosed herein, will become more readily apparent to those having ordinary skill in the art form. The following detailed description of certain preferred embodiments, taken in conjunction with the drawings, sets forth representative embodiments of the subject technology, wherein like reference numerals identify similar structural elements.

For simplicity and clarity of illustration, the drawing figures illustrate the general manner of construction, and descriptions and details of well-known features and techniques may be omitted to avoid unnecessarily obscuring the discussion of the described embodiments of the invention. Additionally, elements in the drawing figures are not necessarily drawn to scale. For example, the dimensions of some of the elements in the figures may be exaggerated relative to other elements to help improve understanding of embodiments of the present invention. Certain figures may be shown in an idealized fashion in order to aid understanding, such as when structures are shown having straight lines, sharp angles, and/or parallel planes or the like that under real-world conditions would likely be significantly less symmetric and orderly. The same reference numerals in different figures denote the same elements, while similar reference numerals may, but do not necessarily, denote similar elements.

In addition, it should be apparent that the teaching herein can be embodied in a wide variety of forms and that any specific structure and/or function disclosed herein is merely representative. In particular, one skilled in the art will appreciate that an aspect disclosed herein can be implemented independently of any other aspects and that several aspects can be combined in various ways.

The present disclosure is described below with reference to apparatuses, devices, modules, units, functions, engines, block diagrams and flowchart illustrations of the methods, systems, and computer program according to one or more exemplary embodiments. Each described apparatus, device, module, unit, function, engine, block of the block diagrams and flowchart illustrations can be implemented in hardware, software, firmware, middleware, microcode, or any suitable combination thereof. If implemented in software, the apparatuses, devices, modules, units, functions, engines, blocks of the block diagrams and/or flowchart illustrations can be implemented by computer program instructions or software code, which may be stored or transmitted over a computer-readable medium, or loaded onto a general purpose computer, special purpose computer or other programmable data processing apparatus to produce a machine, such that the computer program instructions or software code which execute on the computer or other programmable data processing apparatus, create the means for implementing the functions described herein.

Embodiments of computer-readable media includes, but are not limited to, both computer storage media and communication media including any medium that facilitates transfer of a computer program from one place to another. As used herein, a "computer storage media" may be any physical media that can be accessed by a computer or a processor. In addition, the terms "memory " and "computer storage media " include any type of data storage device, such as, without limitation, a hard drive, a flash drive or other flash memory devices (e.g. memory keys, memory sticks, key drive), CD-ROM or other optical storage, DVD, magnetic disk storage or other magnetic storage devices, memory chip(s), Random Access Memory (RAM), Read-Only-Memory (ROM), Electrically-erasable programmable read-only memory (EEPROM), smart cards, or any other suitable medium from that can be used to carry or store program code in the form of instructions or data structures which can be read by a computer processor, or a combination thereof. Also, various forms of computer-readable media may transmit or carry instructions to a computer, including a router, gateway, server, or other transmission device, wired (coaxial cable, fiber, twisted pair, DSL cable) or wireless (infrared, radio, cellular, microwave). The instructions may comprise code from any computer-programming language, including, but not limited to, assembly, C, C++, Visual Basic, HTML, SQL, PHP, Java, Javascript, Python, and bash scripting.

Unless specifically stated otherwise, it will be appreciated that throughout the following description discussions utilizing terms such as processing, computing, calculating, determining, or the like, refer to the action or processes of a computer or computing system, or similar electronic computing device, that manipulate or transform data represented as physical, such as electronic, quantities within the registers or memories of the computing system into other data similarly represented as physical quantities within the memories, registers or other such information storage, transmission or display devices of the computing system.

The terms "comprise," "include," "have," and any variations thereof, are intended to cover a non-exclusive inclusion, such that a process, method, article, or apparatus that comprises a list of elements is not necessarily limited to those elements, but may include other elements not expressly listed or inherent to such process, method, article, or apparatus.

Additionally, the word "exemplary" is used herein to mean "serving as an example, instance, or illustration". Any embodiment or design described herein as "exemplary" is not necessarily to be construed as preferred or advantageous over other embodiments or designs.

The terms "computing machine," "computer", "computing node", "computing apparatus", "processing apparatus", "processing node" or "core" as used in the present subject disclosure are intended to cover without limitation any computer, processor, calculator, computing system, computing node, computing task, computer job, processing, algorithm, and processing resource, processing or computing operation, configured to use or exploit mechanical phenomena.

In the following description and claims, the terms "coupled" and "connected", along with their derivatives, may be used. In particular embodiments, "connected" may be used to indicate that two or more elements are in direct physical or electrical contact with each other. "Coupled" may mean that two or more elements are in direct physical or electrical contact. However, "coupled" may also mean that two or more elements are not in direct contact with each other, but yet still co-operate or interact with each other.

As used herein, the term "packet" may include a unit of data that may be routed or transmitted between nodes or stations or across a network. As used herein, the term packet may include frames, protocol data units or other units of data. A packet may include a group of bits, which may include one or more address fields, control fields and data, for example. A data block may be any unit of data or information bits.

The present subject disclosure may advantageously be implemented on any computing machine of a distributed computing environment comprising several computing machines (e.g. processors) operatively coupled with each other for data communication, for example through a data communication network (e.g. an Ethernet-based packet data communication network). Examples of a computing machine on which embodiments of the present subject disclosure may advantageously be implemented include, without being limited to, a processor, which may be any suitable microprocessor, microcontroller, processing core, Central Processing Unit (CPU), Quantum processing Unit (QPU), Field Programmable Gate Arrays (FPGA), Application Specific Integrated Circuits (ASIC), Digital Signal Processing chip, and/or state machine, or a combination thereof.

It should be understood that embodiments of the present subject disclosure may be used in a variety of applications. Although the present invention is not limited in this respect, the method for data communication disclosed herein may be used in many apparatuses such as in any processor configured for inter-processor data communication, such as, for example, a microcontroller of a network node in an industrial network. However, technical features of the present invention are not limited thereto.

In the following, proposed methods according to embodiments of the present subject disclosure are described in the context of a distributed computing environment usable for electrical motor drive. However, the skilled person would understand that this context is merely exemplary and illustrative, and that embodiments of the proposed methods may be used for data communication between two computing nodes (machines, processors) of a distributed computing environment in a context other than electrical motor drive.

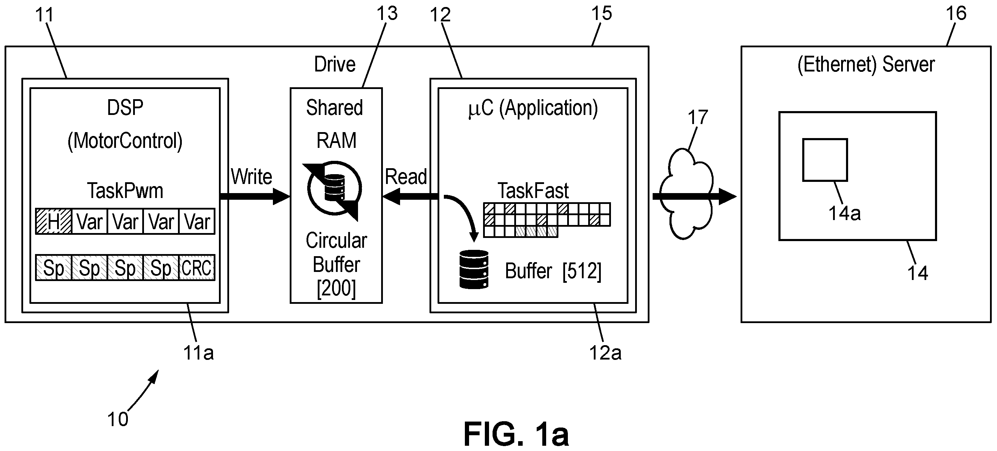

Figure 1a illustrates an exemplary computing environment (10) in which the proposed methods may advantageously be implemented.

Figure 1a illustrates an exemplary computing environment (10) comprising a first data processing apparatus (11) operatively coupled for data communication with a second data processing apparatus (12), in some embodiments through a shared memory (13) as shown on Fig. 1a.

In some embodiments, the computing environment (10) may comprise a third data processing apparatus (14) operatively coupled for data communication with the second data processing apparatus (12).

In some embodiments, each of the first, second and third data processing apparatuses (11, 12, 14) may include a processor (first processor, second processor, and third processor, respectively), which may be any suitable microprocessor, microcontroller, Field Programmable Gate Arrays (FPGA), Application Specific Integrated Circuits (ASIC), Digital Signal Processing chip, and/or state machine, or a combination thereof.

According to various embodiments, one or more of the first, second and third data processing apparatuses (11, 12, 14) may be configured as a multi-processor computer having multiple processors for providing parallel computing. Each of the first, second and third data processing apparatuses (11, 12, 14) may also comprise, or may be in communication with, computer storage media, such as, without limitation, a memory, capable of storing computer program instructions or software code that, when executed by the processor of the first, second and third data processing apparatuses (11, 12, 14), causes the processor to perform the elements described herein. In addition, the memory may be any type of data storage computer storage medium, capable of storing data, such as for example data packets, for use according to one or more embodiments of the present subject disclosure, coupled to the first, second and third data processing apparatuses (11, 12, 14), respectively, to facilitate processing of data stored in association therewith.

It will be appreciated that each of the first, second and third data processing apparatuses (11, 12, 14) shown and described with reference to Fig. 1a is provided by way of example only. Numerous other architectures, operating environments, and configurations are possible.

In one or more embodiments, each of the first (11a) and second (12a) processors of the first (11) and second (12) data processing apparatuses, respectively, may be configured to execute tasks, in some embodiments real-time or near real-time tasks, in a non-synchronized manner.

For example, in some embodiments, the first processor (11a) may be configured to execute computer processing task Task 1 every millisecond, and the second processor (12a) may be configured to execute another computer processing task Task 2 every 3 milliseconds.

In some embodiments, as part of or while executing the computer processing task Task 1, the first processor (11a) may be configured to transfer data (in some embodiments continuously) to the second processor (12a). In some embodiments, as part of or while executing the computer processing task Task 1, the first processor (11a) may be configured to transfer data (in some embodiments continuously) to the third processor (14a), in some embodiments through the second processor (12a).

The three processors shown on Fig. 1a may therefore constitute a chain of processors for the transmission of data from the first processor (11a) (which may be referred to herein as a "sender processor") to the third processor (14a) (which may be referred to herein as a "recipient processor") through the second processor (12a) (which may be referred to herein as an "intermediate processor").

In one or more embodiments, the first processor (11a) (sender processor) may be configured to transmit data to the second processor (12a) as a data stream of data packets as part of transmitting data to the third processor (14a) (recipient processor) through the second processor (12a) (intermediate processor).

The present subject disclosure provides data transmission schemes that can advantageously be used in a computer environment such as the environment (10) illustrated on Fig. 1a, where data is to be transmitted from a sender processor (11a) to a recipient processor (14a) through an intermediate processor (12a) which is configured to relay data received from the sender processor (11a) to the recipient processor (14a), in some embodiments with minimal or even no processing beyond the relaying of received data. Advantageously, the intermediate processor (12a) may have limited capabilities, such as limited processing and/or data communication capabilities (e.g. as compared with that of the sender processor (11a) and the recipient processor (14a)), and may not be configured to decode received data for performing processing on such data. For example, in some embodiments, the intermediate processor (12a) may be a processor of a low-cost platform designed for a variety of devices, such as a microcontroller, an industrial control system, and a wireless networking system. In some embodiments, the sender processor (11a) may have greater capabilities, including with respect to data processing, and may for example comprise a Digital Signal Processor. In the example illustrated by Fig. 1a, the sender processor (11a) may comprise a DSP core configured for control of an electric motor, and the intermediary processor (12a) may be a microcontroller (e.g. featuring an application core) configured for executing an application-level software, both processors being components of a motor drive platform (15). Further, the recipient processor (14a) may be any suitable processor for data communication with the sender processor (in the illustrative example of Fig. 1a, a suitable processor for an Ethernet server), in some embodiments according to any suitable data communication protocol.

In some embodiments, the sender processor (11a) and the recipient processor (14a) may be configured for data transmission and data reception, respectively, according to a data communication protocol. Advantageously, the intermediate processor (12a) may not be configured for fully implementing the data communication protocol, and may merely be configured for implementing a part of the data communication protocol which is compatible with (to the extent of) its limited capabilities. In some embodiments, the intermediate processor (12a) may not be configured for implementing the data communication protocol, so that it may not be configured for processing (interpreting) any of the messages (for example the signaling messages) of the data communication protocol used by the sender processor and the recipient processor.

The exemplary architecture of Fig. 1a is advantageously compatible with use cases in which the first processor (11a) and second processor (12a) are comprised in a first apparatus (15) (for example mounted on an electronic board and operatively coupled with each other through a communication bus), while the third processor (14a) is comprised in a second apparatus (16) which is operatively coupled with the first apparatus (15) through a data communication link, for example of a data communication network (17). In such use case, the first processing apparatus (11) may be configured for tasks such as data collection and processing, and data transmission to the third processing apparatus (14) using the first processor (11a) which transmits data to the third processor (14a) through the second processor (12a) which may merely be used for relaying received data and transmitting such received data to the third processor (14a) via a data communication interface of the first apparatus (15) (which may be implemented (provided) by the second processor (12a)), the data communication network (17), and a data communication interface of the second apparatus (16)). Data may then be transmitted from a sender processor (11a) of a first apparatus (15) to a recipient processor (14a) of a second apparatus (16) through an intermediate processor (12a) of the first apparatus (15), the intermediate processor (12a) having in some embodiments limited capabilities (in terms of processing capabilities or data communication capabilities).

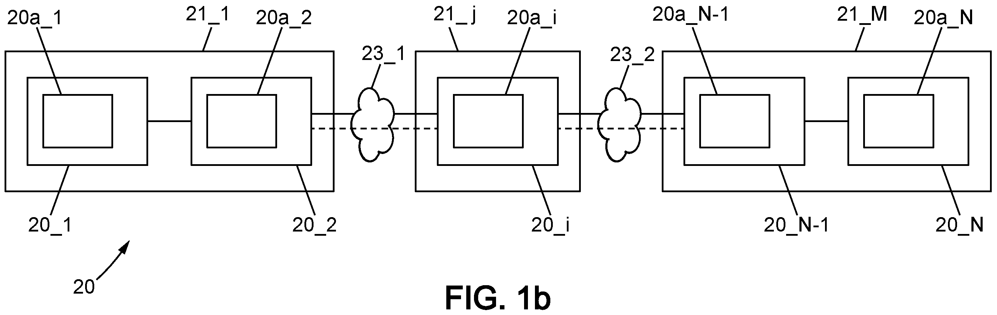

Figure 1b illustrates another exemplary computing environment (20) in which the proposed methods may advantageously be implemented.

Figure 1b illustrates another exemplary computing environment (20) comprising a chain of N processors (20a_1 to 20a_N) comprised in respective data processing apparatuses (20_1 to 20_N). In one or more embodiments, the processing apparatus (20_1) which comprises the first processor (20a_1) of the chain may be operatively coupled for data communication with the processing apparatus (20_2) which comprises the second processor (20a_2) of the chain. In one or more embodiments, the processing apparatus (20_N) which comprises the last processor (20a_N) of the chain (recipient processor) may be operatively coupled for data communication with the processing apparatus (20_N-1) which comprises the one before last processor (20a_N-1) of the chain.

In one or more embodiments, each of the processing apparatus (20_i, i = 2, ..., *N* - 1) which comprises a processor (20a_i, i = 2, ...,*N* - 1) other than the sender processor (20a_1) and the recipient processor (20a_N) may be used as an intermediate processing apparatus (20_i, i = 2, ...,*N* - 1 ) of the chain, each respectively comprising an intermediate processor (20a_i, i = 2, ..., *N* - 1).

In one or more embodiments, each intermediate processing apparatus (20_i, *i* = 2, ... , *N* - 1) of the chain may be operatively coupled for data communication with the immediately preceding processing apparatus in the chain, and with the immediately following processing apparatus in the chain. In one or more embodiments, each intermediate processor (20a_i, i = 2, ..., *N* - 1) of the chain may be operatively coupled for data communication with the immediately preceding processor (20a_i-1) (20a_i-1, *i* = 2, ...,*N* - 1, respectively) in the chain, and with the immediately following processor (20a_i+1) in the chain (20a_i+1 , i = 2, ...,*N* - 1, respectively) .

In one or more embodiments, the sender processor (20a_1) of the chain may be configured to transmit data to the recipient processor (20a_N) of the chain through one or more (in some embodiments each) of the intermediate processors (20a_i, i = 2, ..., *N* - 1) of the chain.

The present subject disclosure provides data transmission schemes that can advantageously be used in a computer environment such as the environment (20) illustrated on Fig. 1b, where data is to be transmitted from a sender processor (20a_1), the sender processor (20a_1) being the first processor in a chain of *N* processors, to a recipient processor (20a_N), the recipient processor (20a_N) being the last processor in the chain of *N* processors, through one or more intermediate processors (20a_i, i = 2, ...,*N* - 1) which form a sequence of intermediate processors in the chain. In some embodiments one or more (in some embodiments each) of the one or more intermediate processors (20a_i, i = 2, ..., *N* - 1) used for transmission of data from the sender processor (20a_1) to the recipient processor (20a_N) may have limited capabilities, such as limited processing and/or data communication capabilities (e.g. as compared with that of the sender processor (20a_1) and the recipient processor 20a_N)), and may for example not have the capabilities to decode received data for performing processing on such data. In some embodiments, the sender processor (20a_1) and the recipient processor (20a_N) may be configured for data transmission and data reception, respectively, according to a data communication protocol. In some embodiments, the sender processor (20a_1) and the recipient processor (20a_N) may be the only two processors of the chain having data communication capabilities consistent with implementing a data communication protocol, such as for example an Internet data communication protocol (e.g. of the TCP/IP type). In some embodiments, at least one of the intermediate processors (20a_i, i = 2, ...,*N* - 1) of the chain may not have data communication capabilities consistent with implementing the data communication protocol used by the sender processor (20a_1) and the recipient processor (20a_N) for data communication. Advantageously, at least one of the intermediate processor (20a_i, i = 2, ...,*N* - 1) of the chain may not be configured for fully implementing a data communication protocol used by the sender processor (20a_1) and the recipient processor (20a_N) for data communication, and may merely be configured for implementing a part (or in some embodiments none) of such data communication protocol which is compatible with (to the extent of) its limited capabilities.

The exemplary architecture of Fig. 1b is advantageously compatible with use cases in which the first processor (20a_1) (sender processor) and second processor (20a_2) (first intermediate processor of the chain) are comprised in a first apparatus (21_1) (for example mounted on an electronic board and operatively coupled with each other through a communication bus of the electronic board), while in some embodiments the i-th intermediate processor (20a_i) is comprised in an intermediate apparatus (21_j) of a chain of M apparatuses (21_j, j = 1, ..., M) coupled with one another for data communication through the chain of processors, and in some embodiments the last processor (20a_N) (recipient processor) and one before last processor (20a_N-1) (last intermediate processor of the chain) may be comprised in a last apparatus (21_M) of a chain of M apparatuses (21_j, j = 1, ..., M) coupled with one another for data communication through the chain of processors.

In such use cases, the first processing apparatus (20_1) of the chain may be configured for tasks such as data collection and processing, and data transmission to the last processing apparatus (20_N) of the chain using the first processor (20a_1) of the chain which transmits data to the last processor (20a_N) of the chain through the intermediate processors (20a_i, i = 2, ..., *N* - 1) of the chain, one or more of which may merely be used for relaying received data from the previous processor (20a_i-1, *i =* 2, ...,*N* - 1) of the chain, and transmitting such received data to the next (immediately following) processor (20a_i+1, i = 2, ... , *N* - 1)) of the chain via respective data communication interfaces of the apparatuses of the chain of apparatuses (21_j, *j =* 1, ..., M), possibly through one or more communication networks (23_1, 23_2). Data may then be transmitted from a sender processor (20a_1) of a first apparatus (21_1) to a recipient processor (20a_N) of a second apparatus (21_M) through one or more intermediate processors (20a_i, i = 2, ..., *N* - 1) of a chain of processors, one or more of the one more intermediate processors (20a_i, i = 2, ..., *N* - 1) having in some embodiments limited capabilities (in terms of processing capabilities or data communication capabilities, in some embodiments relative to capabilities of one or both of the sender processor (20a_1) and the recipient processor (20a_N)).

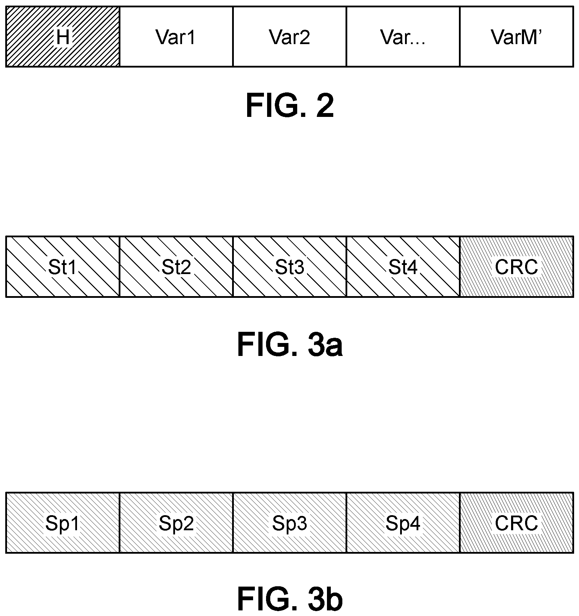

Fig. 2 shows an exemplary data packet that may be used in one or more embodiments for transmission from a sender processor to a recipient processor through one or more intermediary processors.

Shown on Fig. 2 is a data packet (20) comprising a header (21) followed by payload data organized as a sequence of M' data units carrying for examples so-called "variables" corresponding to payload data to be transmitted from a sender processor to a recipient processor. Depending on the embodiments, the M' data units may be of fixed size (e.g. bit size, byte size) or of variable size.

In some embodiments, the header (H) may contain a Sequence Number, for example carried by a 3-bit field of the header (H), a data rate field (for example 11 bits - precision loss), and an enum value (e.g. coded on 2 bits) carrying a Pulse Width Modulation (PWM) range.

In some embodiments, a PWM value may correspond to frequency of data transmission used by the sender. For example, a PWM value of 4 kHz may correspond to data transmitted at a data transmission frequency of 4 kHz.

In some embodiments, the PWM range may correspond to a range of data transmission frequency values used by the sender of the data packet.

In some embodiments, the number M' of data units in a data packet may be based on the PWM range, according to a correspondence known to both the sender of the data packet (in some embodiments the sender processor) and the receiver of the data packet (in some embodiments the recipient processor).

Referring back to Fig. 1a, in some embodiments, the payload carried by each data unit may correspond to data related to a respective variable that needs to be communicated from the first processor (sender processor) (11a) to the third processor (recipient processor) (14a).

In some embodiments, the number of variables for which values are obtained by the sender processor (11a) may be dynamically adapted to comply with a maximum data rate available for transmission of the variables to the recipient processor (14a) through one or more intermediary processors.

For example, in some embodiments, one or more variables may be recorded at every function call of a task executed by the sender processor, while others may be recorded once every *FCN* function calls, *FCN* being a natural integer greater than or equal to 2 (*FCN* ≥ 2).

Referring again back to Fig. 1a, as part of executing Task 1 the first processor (sender processor) (11a) may write data to be sent to the third processor (recipient processor) (14a) through the second processor into the RAM memory shared by the first (sender processor) (11a) and second (intermediary processor) (12a) processors.

Using a shared RAM memory configured between the first (sender processor) (11a) and second (intermediary processor) (12a) processors advantageously allows transferring data from the first processor (sender processor) (11a) to the second processor (intermediary processor) (12a) using a data rate which is consistent with operations of the first processor (sender processor) (11a) and operations of the second processor (intermediary processor) (12a).

### Start and Stop

In one or more embodiments, a transmission protocol used for transmitting a data stream comprising data packets between two processors (a sender processor and a recipient processor) may define a start data packet and a stop data packet to be used for signaling the start of a transmission and the stop of a transmission, respectively.

Fig. 3a shows an exemplary start data packet according to one or more embodiments.

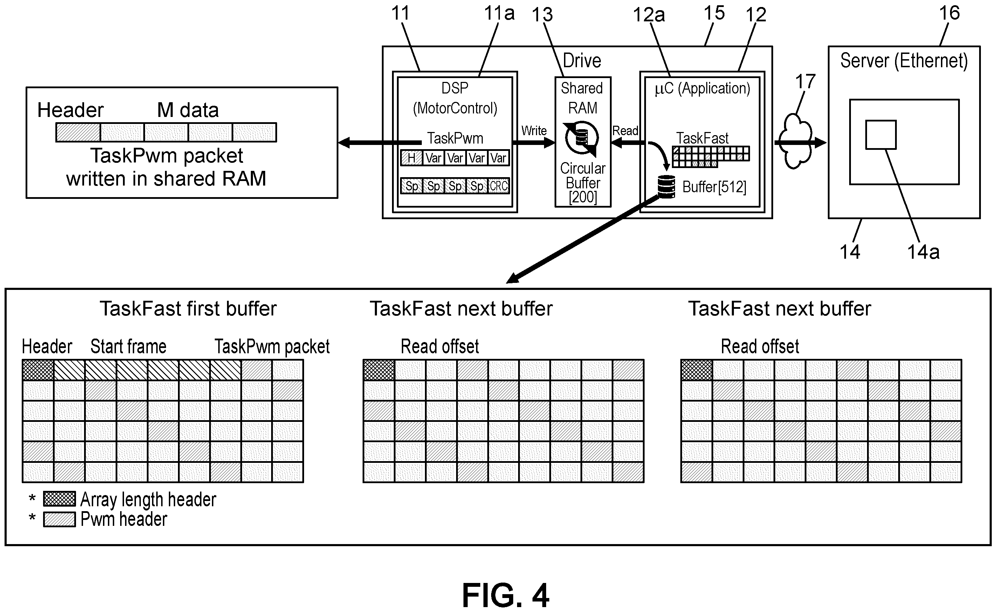

In some embodiments, the start data packet may comprise a predefined start pattern which may have a fixed length (e.g. of a few bytes), so as to be discriminated from other data transmitted by the sender processor. In some embodiments, the start pattern may comprise one or more (a predefined number of) predefined start bit patterns (in the example illustrated on Fig. 3a, 4 bit patterns: "St1", "St2", "St3", and "St4") (e.g. one or more predefined start bytes), which in some embodiments may be repeated a predefined number of times (in some embodiments the predefined number of times may be chosen based on the respective lengths of the start patterns). In some embodiments, the start data packet may further include a CRC corresponding to the start patterns of the start data packet.

Fig. 3b shows an exemplary stop data packet according to one or more embodiments.

In some embodiments, the stop data packet may comprise a predefined stop pattern which may have a fixed length (e.g. of a few bytes), so as to be discriminated from other data transmitted by the sender processor. In some embodiments, the stop pattern may comprise one or more (a predefined number of) predefined stop bit patterns (in the example illustrated on Fig. 3b, 4 bit patterns: "St1", "St2", "St3", and "St4") (e.g. one or more predefined stop bytes), which in some embodiments may be repeated a predefined number of times (in some embodiments the predefined number of times may be chosen based on the respective lengths of the stop patterns). In some embodiments, the stop data packet may further include a CRC corresponding to the stop patterns of the stop data packet.

In some embodiments, one or more of the start data packet and the stop data packet may be transmitted by the sender processor to the recipient processor to initiate or reset transmission of the data stream. In some embodiments, resetting the transmission of the data stream may be performed upon occurrence of a predefined data stream reset condition, such as for example comprising one or more of occurrence of a PWM change, failure to write data on the shared RAM memory, etc.

In one or more embodiments, the predefined stop pattern may be identical to the predefined start pattern, so that a single type of start/stop data packet may be used to signal start and stop of the transmission by the sender processor. Using a single type of start/stop data packet may be advantageous in embodiments in which data is streamed continuously or substantially continuously to the second processor for transmission to the third processor.

Referring back to Figs. 1a and 1b, in embodiments in which data is transmitted by the first processor (11a) to the third processor (14a) through the second processor (12a), the second processor (12a) may advantageously be chosen with scarce resources and/or limited capabilities in order to relay the data received from an immediately preceding processor (20a_i-1) of a chain of processors (in the example of Fig. 1a the first processor (11a)) to from an immediately following processor (20a_i+1) of the chain of processors (in the example of Fig. 1a the third processor (14a)). In such embodiments, the second processor (12a) may be a processor with limited capabilities, including with respect to processing capabilities, on-chip memory, etc. For example, in some embodiments, limitations associated with operations of the second processor (12a) may include one or more of a fixed task frequency (for example at a low value of 4 kHz), a maximum data rate (for example a data rate less than or equal to 128 Bytes/ms), a limited RAM size usable by the second processor (12a), a limited ROM size usable by the second processor (12a), and limited processing performances of the second processor (12a). Nevertheless, advantageously, the limited resources and capabilities of the second processor (12a) operating as an intermediary processor of a chain of processors may be sufficient for implementing a scheme proposed in the present subject disclosure, as such scheme may advantageously be used in an intermediary processor with severe constraints in terms of resources and capabilities.

In some embodiments, the second processor (12a, 20a_i for i=2,...,N-1) may not have the capabilities or may not be configured to decode data received from the immediately preceding processor (20a_i-1) of a chain of processors (in the example of Fig. 1a the first processor (11a)), and may only be used for data transmission of the received data to the immediately following processor (20a_i+1) of the chain of processors (in the example of Fig. 1a the third processor (14a)) by copying received data from a first (e.g. in some embodiments small) (memory) buffer, such as for example the shared RAM (13), to a second (in some embodiments larger) (memory) buffer. For example, in some embodiments, the second processor (12a, 20a_i for i=2,...,N-1) may be configured to read data written by the immediately preceding processor (20a_i-1) of the chain of processors (in the example of Fig. 1a the first processor (11a)) into the shared RAM (13) and write such data into a buffer (referred to as an "application buffer") operatively coupled to the second processor (12a, 20a_i for i=2,...,N-1) (or integrated in the same chip as the second processor (12a, 20a_i for i=2,...,N-1)), with no data processing in between the reading the shared RAM and the writing into the application buffer. In some embodiments, the second processor (12a, 20a_i for i=2,...,N-1) may be configured to merely detect that new data was written into the shared RAM (13), read the data written into the shared RAM (13), and write such data into its application buffer, with no data processing in between the reading the shared RAM and the writing into the application buffer. In some embodiments, the application buffer may have a predetermined fixed size, such as for example 512 bytes.

In some embodiments, the size of a memory buffer used by a processor (20a_i) of a chain of processors may chosen based on one or more of: an execution frequency of a computer task (e.g. a task "Task_i" for processor (20a_i)) executed by the processor (20a_i), and the smallest transmission data rate along the chain of processors.

In one or more embodiments, the second processor (12a, 20a_i for i=2,...,N-1) may be configured to read data stored in the shared RAM memory at every task call of a task (e.g. a task "Task_i" for processor (20a_i)) executed by the second processor (12a, 20a_i for i=2,...,N-1), and to write such data into the application buffer.

In some embodiments, the second processor (12a, 20a_i for i=2,...,N-1) may be configured for transmitting data stored in the application buffer to the immediately following processor (20a_i+1) of the chain of processors (in the example of Fig. 1a the third processor (14a)) under the condition that the application buffer is X% full (for example X = 100), that is, full to a predetermined extent.

In some embodiments, the second processor (12a, 20a_i for i=2,...,N-1) may be configured for, upon determining that the application buffer is X% full (for example X = 100), that is, full to a predetermined extent, transmitting the data stored in the application buffer to the immediately following processor (20a_i+1) of the chain of processors (in the example of Fig. 1a the third processor (14a)).

Conditioning the transmitting of the data stored in the application buffer to the application buffer being full to a predetermined extent advantageously reduces the frequency of data transfers and thereby improves the network load in embodiments where data is transmitted by the second processor (12a, 20a_i for i=2,...,N-1) to another processor through a data communication network. In addition, conditioning the transmitting of the data stored in the application buffer to the application buffer being full to a predetermined extent allows optimizing CPU time usage at the second processor (by avoiding implementation at the second processor of a scheme through which the second processor needs to decode the received data, for example to detect a stop transmission message (e.g. a stop packet)), which may be advantageously consistent with the limited capabilities of the second processor.

In such embodiments, a situation may occur in which the application buffer is X% full (for example X = 100), that is, full to a predetermined extent and the data last copied in the application buffer does not correspond to an entire packet, but instead to part of a data packet streamed by the immediately preceding processor (20a_i-1) of the chain of processors (in the example of Fig. 1a the first processor (11a)) to the second processor (12a, 20a_i for i=2,...,N-1). As a consequence, the last data packet written into the application buffer may not be complete.

Figure 4 illustrates the transmission of a data stream from a first (sender) processor to a third (recipient) processor according to one or more embodiments of the present subject disclosure.

The present disclosure advantageously provides a scheme to be implemented by the sender processor to adapt the data transmission to the recipient processor to the use of one or more intermediary processors in between the sender processor and the recipient processor which may have limited resources and capabilities, in a transparent manner to the recipient processor (in particular to a data communication protocol that may be used by the sender processor and the recipient processor for data communication).

The exemplary system of Fig. 4 corresponds to that shown of Fig. 1a, the same reference numerals will be used, and reference is made to the description provided in relation with Fig. 1a. However, the person of ordinary skill in the art will understand that embodiments of the present subject disclosure described in relation with Fig. 1a and Fig. 4 may be used in any suitable computing environment, such as for example the environment shown on Fig. 1b. Therefore, references to Fig. 1b may also be used in the following.

As shown on Fig. 4, in some embodiments, a first processor (11a, 20a_1) ("MotorControl") operating as a sender processor may, as part of executing a task ("TaskPwm"), write data packets of a data stream to be transmitted to a third processor ("Ethernet server processor") operating as a recipient processor. In some embodiments, the first, second and third processors may form a chain of processors, with a first and second processor being comprised in a first device (such as for example a motor drive), and the third processor being comprised in a second device (such as for example a server). Given the architecture of the exemplary system shown on Fig. 4 which comprises the first device operatively coupled to the second device, in some embodiments, data transmitted by the first device to the second device during execution of a task by the first processor (11a, 20a_1) may be transmitted to the third processor through the chain of processors formed by the first, second and third processors. As a consequence, in some embodiments, data which is transmitted by the first processor (11a, 20a_1) (comprised in the first device) - operating as the sender processor - to the third processor (comprised in the second device) - operating as the recipient processor - may be transmitted through one or more intermediary processors of the chain of processors between the sender processor and the recipient processor, such as in the exemplary system of Fig. 1a and 4 the second processor (e.g. the application microcontroller 12a).

In one or more embodiments, the first processor (11a, 20a_1) may be configured to write the data packets of the data stream to be transmitted to the third processor in a memory shared between the first processor (11a, 20a_1) and the second processor to transmit the data stream to the third processor ("Ethernet server processor") through the second processor (e.g. the application microcontroller 12a).

In one or more embodiments, the second processor may be configured to read the data written in the shared memory upon detecting that data has been written into the shared memory. In some embodiments, the second processor may be further configured to write the data read in the shared memory in a (memory) buffer.

As described in relation with Fig. 2, in some embodiments, the data packets of the data stream transmitted from the first processor (11a, 20a_1) to the third processor through the second processor may comprise a header and one or more payload fields ("Varₖ", *k =* 1, ... , *M', M'* ≥ 1).

As described in relation with Fig. 3a, in some embodiments, start of the transmission of P data packets of a data stream transmitted from the first processor (11a, 20a_1) to the third processor may be signaled to the third processor by a start data packet (an example of which is illustrated on Fig. 3a). In some embodiments, the second processor may not be configured to use signaling packets such as the start data packets, and may write the received start data packet in its (memory) buffer as any other data read from the shared memory. In some embodiments, one or more of the intermediary processors located in between the sender processor and the recipient processor in a data communication chain of processors may not be configured (or have the capabilities) to perform processing of (at least some of) one or more signaling packets transmitted by the sender processor to the recipient processor (including reading and interpreting the one or more signaling packets).

As shown on Fig. 4, in one or more embodiments, the second processor may be configured for, upon detecting that data has been received and is to be written in its (memory) buffer for transmission to the next (immediately following) processor of a data communication chain of processors, generate a header data unit to be written first in its (memory) buffer.

In one or more embodiments, the (memory) buffer used for data communication by the second processor may be structured as a set of *SEG#* memory segments, and the header data unit may have a predefined (bit) length that corresponds to that of a (first) segment of the (memory) buffer. For example, in some embodiments, the (memory) buffer may have a 512 bytes storage capacity and may comprise SEG# = 128 segments of a fixed size of 4 bytes.

In one or more embodiments, the header data unit may comprise data related to a size of the (memory) buffer (e.g. in some embodiments data representing a number *SEG#* of segments, and in some embodiments in which the size of the segments is fixed a size of each segment).

As shown on Fig. 4, in cases where its (memory) buffer is empty, the second processor may be configured to, upon reception of new data (for example written in the shared memory), start a (first) data transmission cycle, which in some embodiments may comprise: writing a header data unit into the first segment of its (memory) buffer, and writing received data into segments of its (memory) buffer as they are received, until its (memory) buffer is X% full (for example X = 100), that is, full to a predetermined extent. Once a first (memory) buffer ("taskfast first buffer") is X% full (for example X = 100), that is, full to a predetermined extent, the second processor may end the data transmission cycle by transmitting the content of the first (memory) buffer (the data stored in the first (memory) buffer) to the next (immediately following) processor of the chain of processors (in the exemplary case of Fig. 4 the third processor, that is, the recipient processor).

In some embodiments, the header data unit may be used as a header of the data stored in the (memory) buffer used by the second processor. In some embodiments, the header data unit may comprise a counter, which counts the number of data packets stored in the (memory) buffer. For example, the counter may be initialized at a predetermined value, and may be updated (e.g. incremented) each time a new data packet is written into the (memory) buffer of the second processor.

In one or more embodiments, upon emptying the (memory) buffer by transmitting the content of the first (memory) buffer, the second processor may start another data transmission cycle, which may also comprise: writing a header data unit into the first segment of its (memory) buffer, writing received data into segments of its (memory) buffer as they are received, until its (memory) buffer is X% full (for example X = 100), that is, full to a predetermined extent, and once the (memory) buffer ("taskFast next buffer") is X% full (for example X = 100), that is, full to a predetermined extent, transmit the content of the first (memory) buffer (the data stored in the first (memory) buffer) to the next (immediately following) processor of the chain of processors (in the exemplary case of Fig. 4 the third processor, that is, the recipient processor).

In some embodiments, depending on the structure of the data stream transmitted by the first (sender) processor, a portion of a data packet, or a packet header may be written in the last segment of the (memory) buffer during a data transmission cycle. For example, as shown on Fig. 4, in some embodiments the last segment of a (memory) buffer (in the example of Fig. 4, the first and third (memory) buffers) may be used to store a variable of a data packet, and the last segment of another (memory) buffer (in the example of Fig. 4, the second (memory) buffer) may be used to store a header of a data packet

### Traffic management policy of intermediate processor

In one or more embodiments, the second processor may be configured with a buffer management rule (traffic management policy) for managing the storing into its buffer memory of received data. In some embodiments, according to this buffer management rule (traffic management policy), data packets of the stream of data packets may be written in the buffer memory as they are received, until the buffer memory is X% full (for example X = 100), that is, full to a predetermined extent (X%).

In one or more embodiments, according to this buffer management rule (traffic management policy), received data packets of the stream of data packets written in the buffer memory may be transmitted to a third processor upon determining that the buffer memory is X% full (for example X = 100), that is, full to the predetermined extent. Depending on the embodiment, data may be transmitted by the second processor to the third processor using data transfer messages according to any suitable data communication protocol (consistent with the data communication capabilities of the second processor), or using a shared memory in which the transmitted data is written.

In one or more embodiments, the buffer management rule (traffic management policy) used by the second processor may prescribe that data stored in the (memory) buffer may be transmitted to the next (immediately following) processor of the chain of processors (in the exemplary case of Fig. 4 the third processor, that is, the recipient processor) only upon determining that the (memory) buffer is X% full (for example X = 100), that is, full to a predetermined extent, so as to optimize the transmission flow of data packets through the second (intermediate) processor, which in some embodiments may be a processor having limited capabilities (in particular for data processing for data communication).

### Operations at the first processor (sender processor):

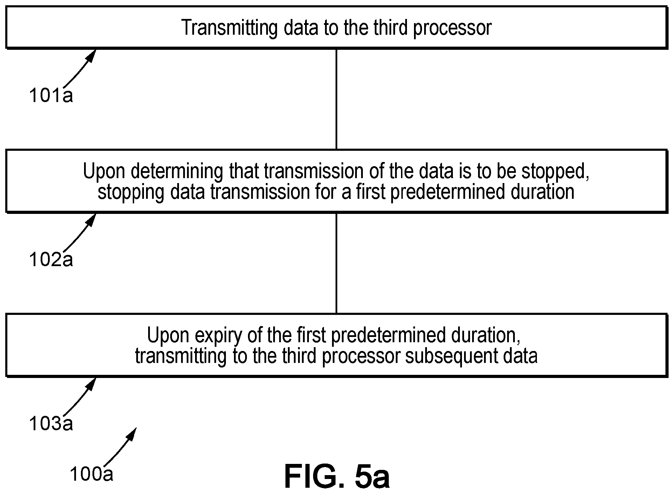

Fig. 5a shows a block diagram illustrating a proposed method for data communication (100a) by a sender processor according to embodiments of the present subject disclosure.

One may consider a first processor of a computing environment, such as for example the computing environment (10, 20) of Fig. 1a or Fig. 1b, where the first processor is configured to operate as a sender processor (11a, 20a_1) in a chain of processors used for data transmission from the first processor to a third processor configured to operate as a recipient processor (14a, 20a_N) through one or more second processors configured to operate as an intermediate processor (12a, 20a_i for i=2,...,N-1). In one or more embodiments, the first processor may be operatively coupled with an immediately following processor of the chain for data communication, such as for example the second processor operating as an intermediary processor coupled to the first processor.

In one or more embodiments, the first processor and the second processor may be processors of a chain of processors for data transmission from the first processor operating as a sender processor being the first processor of the chain of processors to a third processor operating as a recipient processor and being the last processor of the chain of processors.

In one or more embodiments, the second processor may be an intermediary processor of the chain of processors through which data is transmitted from the first (sender) processor to the third (recipient) processor.

In some embodiments, data may be transmitted from the first processor operating as a sender processor to the recipient processor using the chain of processors for data transmission from the sender processor to the recipient processor, so that the transmitted data may transit through the second (intermediary) processor. As a consequence, in some embodiments, data may be transmitted by the first (sender) processor to the third (recipient) processor through the second (intermediary) processor for transmission to the recipient processor at the end of the chain of processors. From the standpoint of the first processor, such data may be transmitted to the third processor, according to a proposed scheme which accounts for the presence of one or more intermediary processors in the data transmission path from the first processor to the third processor.

In the following, the proposed method for data communication by a sender processor will be described in relation with Figs. 1a and 1b which illustrate the nonlimiting and exemplary cases in which the second processor is an intermediary processor used in the transmission of data from the sender processor to the recipient processor. As described in relation with Fig. 1a, in some embodiments (in which the first (sender) processor is immediately followed in the chain of processors by the second (intermediary) processor) data may be transmitted by the first processor to the second processor using a shared (RAM) memory coupled to the first processor and to the second processor, for transmission to the third (recipient) processor. In some embodiments, data may be transmitted by the first processor by writing the transmitted data in the shared memory, and the transmitted data may be read in the shared memory by the second processor (being the intermediary processor immediately following the first processor in the chain of processors formed by the first, second, and third processors).

In one or more embodiments, the first processor may transmit (101a) data (e.g. data packets) to the third processor, in some embodiments through a shared memory coupled to the first and second processors. For example, in some embodiments, the first processor may transmit a stream of *P* (*P* ≥ 1, *P* being a natural integer) data packets to the third processor through the second processor, in some embodiments through a shared memory coupled to the first and second processors. In some embodiments, the first processor may transmit data packets to a third processor through a second processor, the first processor operating as a sender processor being the first processor of a chain of processors, the second processor operating as an intermediary processor of the chain of processors, and the recipient processor being the last processor of the chain of processors.

In some embodiments, P data packets may be streamed continuously or substantially continuously to the second processor (in some embodiments through the shared memory), until the transmission of the P data packets of the stream is to be stopped (for example in case the transmission of the data packets is complete, is to be interrupted, or is to be reset).

In one or more embodiments, upon determining that the transmission of data (e.g. of the data packets (of the stream)) is to be stopped (for example in case the transmission of the data (packets) is complete, is to be interrupted, or is to be reset), the first processor may stop (102a) transmitting data (to the third processor) for a first predetermined duration. In some embodiments, upon determining that the transmission of the data packets of the stream is to be stopped (for example in case the transmission of the data packets is complete, is to be interrupted, or is to be reset), the first processor may stop writing data to a memory shared with the second processor for a first predetermined duration, for stopping the transmission of data (to the third processor) for the first predetermined duration.

In one or more embodiments, upon expiry of the first predetermined duration, the first processor may transmit (103a) to the third processor subsequent data (e.g. one or more subsequent data packets).

The first predetermined duration may advantageously be used to pause transmission of data for a predetermined period of time. This data transmission pause, which may be transparent to the recipient processor, may be used by an intermediary processor of the chain of processors between the sender processor and the recipient processor, as described in further details in the present subject disclosure according to embodiments thereof.

In some embodiments, the one or more subsequent data packets may comprise an end of transmission signaling packet. In some embodiments, the end of transmission signaling packet may correspond to the stop data packet described in relation to Fig. 3b. Advantageously, the end of transmission signaling packet may not be decoded by one or more of the intermediary processors of the chain of processors between the sender processor and the recipient processor, which may handle its reception and transmit such end of transmission signaling packet to the next processor of the chain with no need to decode (interpret) this end of transmission signaling packet.

In one or more embodiments, the first processor may use a first timer for stopping data transmission (to the third processor) for the first predetermined duration: In some embodiments, the first processor may be configured to, upon determining that transmission of the data packets is to be stopped, starting a transmitter end of transmission timer. In some embodiments, the transmitter end of transmission timer may be configured to expire at the end of the first predetermined duration.

In some embodiments, the first processor may be configured to stop data transmission (to the third processor) while the transmitter end of transmission timer is running.

For example, in some embodiments, the first processor may be configured to transmit a stream of *P* data packets to the third processor, and once the last packet of the stream of *P* packets has been transmitted, interrupt its transmission of data to the third processor for a first predetermined duration. In particular, once the last packet of the stream of *P* packets has been transmitted, the first processor may transmit any signaling message required to be transmitted pursuant to the data communication protocol used by the first processor to transmit data to the third processor only after a transmission pause of the first predetermined duration.

In one or more embodiments, the first processor may be configured to proceed with transmitting the subsequent data (the one or more subsequent data packets) (e.g. transmitting the end of transmission signaling packet) (to the third processor) upon determining that the transmitter end of transmission timer has expired.

In one or more embodiments, the first processor may be configured to stop data transmission (to the third processor) for a second predetermined duration upon transmitting the subsequent data (e.g. the one or more subsequent data packets) (e.g. transmitting the end of transmission signaling packet) (to the third processor).

In one or more embodiments, the first processor may use a second timer for stopping data transmission to the third processor for the second predetermined duration: In some embodiments, the first processor may be configured to, upon transmitting the subsequent data (e.g. the one or more subsequent data packets) (e.g. transmitting the end of transmission signaling packet) (to the third processor), starting a transmitter stop transmission timer. In some embodiments, the transmitter stop transmission timer may be configured to expire at the end of the second predetermined duration.

Depending on the embodiment, the first predetermined duration and the second predetermined duration may be defined in relation with each other. In some embodiments the first predetermined duration and the second predetermined duration may be defined to be equal, so that the first processor may advantageously only manage one predetermined duration parameter.

### Operations at the second processor (intermediate processor):

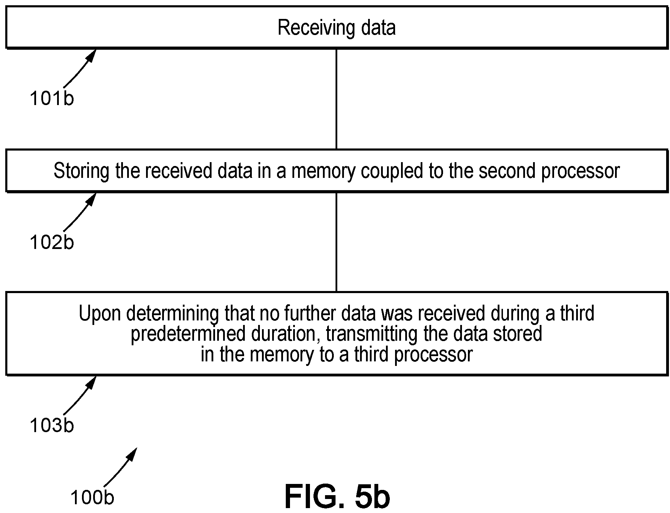

Fig. 5b shows a block diagram illustrating a proposed method for data processing (100b) by an intermediate processor (of a chain of processors) according to embodiments of the present subject disclosure.

As described above in relation with Fig. 5a, one may consider a second processor of a computing environment, such as for example the computing environment (10, 20) of Fig. 1a or Fig. 1b, which comprises a chain of processors used for data transmission from a first (sender) processor configured to operate as a sender processor (11a, 20a_1) to a third (recipient) processor configured to operate as a recipient processor (14a, 20a_N) through one or more second (intermediate) processors configured to operate as an intermediate processor (12a, 20a_i for i=2,...,N-1). In one or more embodiments, the second processor may be operatively coupled with an immediately preceding processor of the chain (such as for example the first processor operating as the sender processor) and with an immediately following processor of the chain (such as for example the third processor operating as the recipient processor) for data communication.

In one or more embodiments, the first processor and the second processor may be processors of a chain of processors for data transmission from the first processor operating as a sender processor to a recipient processor being the last processor of the chain of processors. The second processor may be an intermediary processor of the chain of processors through which data is transmitted from the sender processor to the recipient processor. In some embodiments, data may be transmitted from the first processor operating as a sender processor to the recipient processor using the chain of processors for data transmission from the sender processor to the recipient processor, so that the transmitted data may transit through the second (intermediary) processor. As a consequence, in some embodiments, data may be transmitted by the first (sender) processor to the second (intermediary) processor for transmission to the recipient processor at the end of the chain of processors. Consequently, in some embodiments, data transmitted by the first (sender) processor for transmission to the recipient processor at the end of the chain of processors may be received by the second (intermediary) processor.

As described in relation with Fig. 1a, in some embodiments data may be transmitted by the first processor to the second processor using a shared (RAM) memory coupled to the first processor and to the second processor. In some embodiments, data may be transmitted by the first (sender) processor by writing the transmitted data in the shared memory, and the transmitted data may be read in the shared memory by the second (intermediate) processor.

In one or more embodiments, the second processor (12a, 20a_i for i=2,...,N-1) may be configured to receive (101b), for example from the first processor (11a, 20a_1), data (e.g. one or more data packets). For example, in some embodiments, the second processor (12a, 20a_i for i=2,...,N-1) may be configured to receive (101b), for example from the first processor (11a, 20a_1), a stream of P data packets, P being a natural integer greater than or equal to 1 (*P* ≥ 1).

In one or more embodiments, the second processor (12a, 20a_i for i=2,...,N-1), which may be an intermediary processor in a chain of processors between a sender processor to a recipient processor, may receive - as intermediary processor of the chain of processors - the data transmitted from the first (sender) processor to the third (recipient) processor.

In one or more embodiments, as an intermediary processor of the chain of processors, the second processor (12a, 20a_i for i=2,...,N-1) may be configured to receive data transmitted by the sender processor (11a, 20a_1) of the chain to the recipient processor (14a, 20a_N) of the chain from the processor (11a, 20a_i-1 for i=2,...,N-1) immediately preceding the second processor (12a, 20a_i for i=2,...,N-1) in the chain.

In one or more embodiments, as an intermediary processor of the chain of processors, the second processor (12a, 20a_i for i=2,...,N-1) may be configured to transmit data (transmitted by the sender processor (11a, 20a_1) of the chain to the recipient processor (14a, 20a_N) of the chain) received from the processor (11a, 20a_i-1 for i=2,...,N-1) immediately preceding the second processor (12a, 20a_i for i=2,...,N-1) in the chain to the processor (14a, 20a_i+1 for i=2,...,N-1) immediately following the second processor (12a, 20a_i for i=2,...,N-1) in the chain.

In one or more embodiments, the second processor (12a, 20a_i for i=2,...,N-1) may be configured for storing (102b) received data in a (memory) buffer. In some embodiments, the second processor (12a, 20a_i for i=2,...,N-1) may be configured for storing the received data (e.g. the received one or more data packets) in a memory coupled to the second processor (12a, 20a_i for i=2,...,N-1).

In one or more embodiments, the second processor (12a, 20a_i for i=2,...,N-1) may be configured for reading new data being received in a memory (e.g. shared with a processor (20a_i-1) immediately preceding the second processor (12a, 20a_i for i=2,...,N-1) in a chain of processors, for example the first processor (11a)), and writing such newly received data in a (memory) buffer coupled to the second processor (12a, 20a_i for i=2,...,N-1).

As described in relation with Figs. 1a and 1b, in some embodiments the second processor (12a, 20a_i for i=2,...,N-1) may not have the capabilities or may not be configured to decode the received data (for example received from the first processor (11a) (in some embodiments through one or more other intermediate processors (20a_2, ..., 20a_i-1) located in-between the first (sender) processor (11a, 20a_1) and the second (intermediate) processor (12a, 20a_i for i=2,...,N-1) in a data communication chain of processors)), and may only be capable to transmit the received data to a third processor (14a, 20a_N). Depending on the embodiment, the third processor may be any processor of a sub-chain of processors between the second processor and the recipient processor in a chain of processors for data transmission from a sender processor to a recipient processor through one or more intermediate processors (20a_2, ..., 20a_N-1). In some embodiments, data transmission by the second processor may comprise copying received data from a first (memory) buffer, such as for example a shared RAM (shared with the immediately preceding processor (20a_i-1) in the chain of processors), to a second (memory) buffer managed by the second (intermediate) processor (12a, 20a_i for i=2,...,N-1). Data may be transmitted by the second (intermediate) processor (12a, 20a_i for i=2,...,N-1) to the third processor using any suitable data communication protocol that is consistent with data communication capabilities of each of the second and third processors.

For example, in some embodiments, the second (intermediate) processor (12a, 20a_i for i=2,...,N-1) may be configured to write received data (e.g. of the received data stream) into a (memory) buffer operatively coupled to the second processor (12a, 20a_i for i=2,...,N-1) (or integrated in the same chip as the second processor (12a, 20a_i for i=2,...,N-1)). In some embodiments, the (memory) buffer may have a predetermined fixed size, such as for example 512 bytes. In some embodiments, the second (intermediate) processor (12a, 20a_i for i=2,...,N-1) may only have limited capabilities that allow writing received data packets (e.g. of the stream of data packets) into the (memory) buffer and managing the transmission of data stored in the (memory) buffer according to certain specific buffer management rules according to embodiments of the present subject disclosure.

For example, as described above in relation with Fig. 4, in one or more embodiments the second (intermediate) processor may have limited data processing capabilities, including for data communication. In some embodiments, consistent with these limited capabilities, the second (intermediate) processor (12a, 20a_i for i=2,...,N-1) may be configured to follow a traffic management policy (which may also be referred to as a "buffer management rule") according to which the second buffer transmits data to the next (immediately following) processor in the chain of processors under the condition that its buffer memory (containing data to be transmitted) is X% full (for example X = 100). In some embodiments, the second (intermediate) processor (12a, 20a_i for i=2,...,N-1) may be configured to follow a traffic management policy according to which the second (intermediate) processor (12a, 20a_i for i=2,...,N-1) transmits data to the next (immediately following) processor in the chain of processors under the condition that its buffer memory (containing data to be transmitted) is X% full (for example X = 100), that is, full to a predetermined extent.

In one or more embodiments, the second (intermediate) processor (12a, 20a_i for i=2,...,N-1) may be configured for, upon (based on) determining that no further data was received from the first (sender) processor (11a, 20a_1) during a third predetermined duration, transmitting (103b) the data stored in the (memory) buffer, for example to a third processor (14a, 20a_i+1,..., 20a_N). In some embodiments, the second (intermediate) processor (12a, 20a_i for i=2,...,N-1) may be configured for, upon (based on) determining that no data was received (from a preceding processor (20a_i-1) of the chain of processors, for example from the first (sender) processor (11a, 20a_1)) during a third predetermined duration, transmitting (103b) the data stored in the (memory) buffer to a next (immediately following) processor (20a_i+1) in a chain of processors.

In embodiments in which the second (intermediate) processor (12a, 20a_i for i=2,...,N-1) is configured to follow a traffic management policy according to which the second buffer transmits data to the next (immediately following) processor (20a_i+1) in the chain of processors under the condition that its buffer memory (containing data to be transmitted) is X% full (for example X = 100), the present subject disclosure provides that the traffic management policy may be violated by the second (intermediate) processor (12a, 20a_i for i=2,...,N-1) upon determining that no new data was received during a predetermined period. Advantageously, the end of transmission of a data stream (e.g. of P data packets) by a sender processor to a recipient processor through an intermediate processor (in a chain of processors in which the first processor (11a, 20a_1) is the sender processor and the last processor (14a, 20a_N) is the recipient processor) may be managed in a manner which is compatible with an intermediate processor being constrained in resources and/or capabilities. The proposed scheme advantageously provides management of data transmission (between a sender processor and a recipient processor) by an intermediate processor which has limited resources and/or capabilities, for example which may merely be configured for relaying received data (through managing data stored in a (memory) buffer), in some embodiments without any further processing of such received data.

In one or more embodiments, the third predetermined duration configured at the second processor (intermediate processor) and the first predetermined duration configured at the first (sender) processor (11a, 20a_1) (sender processor) may be chosen to be related to each other.

For example, in some embodiments the third predetermined duration may be defined (chosen) first, for example based on one or more of characteristics of the buffer memory used by the second (intermediate) processor (12a, 20a_i for i=2,...,N-1) (e.g. the size of the buffer memory), and capabilities of the second (intermediate) processor (12a, 20a_i for i=2,...,N-1), and in such embodiments the first predetermined duration may be defined based on the third predetermined duration.

As another example, in some embodiments, the first and third predetermined durations may be defined (chosen) based on the execution frequency of one or more (e.g. all) of the intermediary processors of the chain of processors configured for implementing a scheme according to embodiments of the present subject disclosure. For example, in a chain of N processors as illustrated by Fig. 1b, the first and third predetermined durations may be defined (chosen) based on one or more of the respective sizes of the respective (memory) buffers used by the intermediary processors of the chain, and the respective execution frequencies of the respective tasks respectively executed by the intermediary processors of the chain, so that a transmission stop by a processor (of rank i) can be identified by the next (immediately following) processor (of rank i+1) of the chain.

In one or more embodiments, the second (intermediate) processor (12a, 20a_i for i=2,...,N-1) may be configured for monitoring whether data is being received (for example in some embodiments by monitoring whether new data was written in its buffer memory). In situations where new data is no longer being received (for example because the first (sender) processor has completed transmission of all the packets of a data stream to a recipient processor, or because the first (sender) processor has decided to reset the transmission of the packets of a data stream to a recipient processor), no new data may be written in the buffer memory used by the second (intermediate) processor (12a, 20a_i for i=2,...,N-1), so that the second (intermediate) processor (12a, 20a_i for i=2,...,N-1) may monitor whether new data is being received through monitoring whether new data is being written (and stored) in its buffer memory.

In one or more embodiments, the second (intermediate) processor (12a, 20a_i for i=2,...,N-1) may be configured for monitoring whether data is being received by monitoring whether new data was written in a memory (in some embodiments shared with the first (sender) processor (11a, 20a_1)) in which new data is being written by the first (sender) processor (11a, 20a_1). In situations where new data is no longer being received (for example because the first (sender) processor has completed transmission of all the packets of a data stream to a recipient processor, or because the first (sender) processor has decided to reset the transmission of the packets of a data stream to a recipient processor), no new data may be written in the (shared) memory, so that the second (intermediate) processor (12a, 20a_i for i=2,...,N-1) may monitor whether new data is being received through monitoring whether new data is being written in the (shared) memory.

In one or more embodiments, the second (intermediate) processor (12a, 20a_i for i=2,...,N-1) may not be configured to implement the data communication protocol used by the first (sender) processor and the recipient processor for data communication, or to implement only part of such protocol. As a consequence, data may be transmitted by the first (sender) processor to the recipient processor, which may be the last processor of a chain of processors in which the second (intermediate) processor (12a, 20a_i for i=2,...,N-1) is an intermediate processor, in a transparent manner for the second (intermediate) processor, which may not be configured for interpreting any signaling message of the data communication protocol used by the sender processor and the recipient processor (e.g. a start packet illustrated on Fig. 3a, a stop packet illustrated on Fig. 3b). In particular, the second (intermediate) processor may not know whether a data transmission between the sender processor and the recipient processor is complete, aborted, or reset. The proposed scheme may advantageously be implemented in an intermediary processor which has very limited resources and/or capabilities.

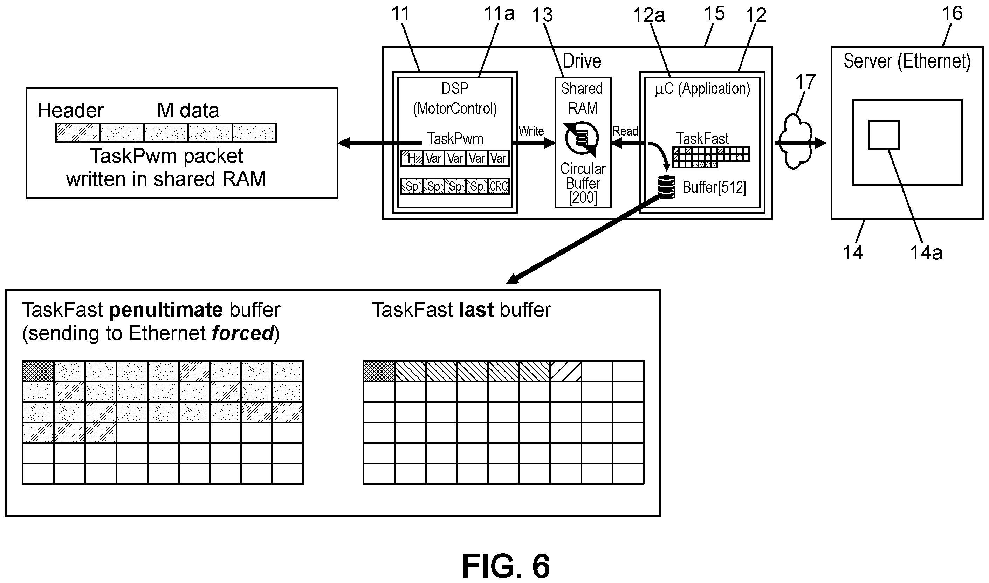

Figure 6 illustrates the transmission of a data stream from a sender processor to a recipient processor through an intermediate processor according to one or more embodiments of the present subject disclosure.

Fig. 6 illustrates the operations at the second (intermediate) processor for the end of transmission of a stream of P data packets, from the first processor (11a) ("MotorControl") to a third processor (14a) through the second processor (12a, 20a_i for i=2,...,N-1). The beginning of transmission of a stream of P data packets, from the first processor (11a) ("MotorControl") to the third processor (14a) through the second processor (12a, 20a_i for i=2,...,N-1) is described herein in relation to Fig. 4.

As described in relation to Fig. 4, in one or more embodiments, the second processor may receive the last packets of the stream of P data packets, and may generate a header data unit to be written first in its (memory) buffer and may write the received data packets (with their respective headers) in its (memory) buffer.

As shown on Fig. 6, the (memory) buffer may not be X% full after writing therein the last packet (wherein X is a predetermined level). In some embodiments, once the last data packet is written in the (memory) buffer, the second processor may determine that its (memory) buffer is not X% full (for example is not 100% full). In accordance with its buffer management rule (traffic management policy), further to determining that its (memory) buffer is not X% full (for example is not 100% full), the second processor may not transmit data stored in its (memory) buffer to the next (immediately following) processor of the chain of processors (in the exemplary case of Fig. 6, the third processor, that is, the recipient processor).

In one or more embodiments, upon writing the last data packet in the (memory) buffer, the second processor may start monitoring whether further data is received for a third predetermined duration.

In one or more embodiments, upon determining that no data was received from the first processor during a third predetermined duration, the second processor (12a, 20a_i for i=2,...,N-1) may transmit the remaining data packets stored in the memory to the third processor (14a), for example through the data communication network (17).

Accordingly, the buffer management rule of the second processor may in some embodiments prescribe that in cases where the (memory) buffer contains data stored therein but is less than X% full, data stored in the (memory) buffer may be transmitted to the (immediately following) processor of the chain of processors (in the exemplary case of Fig. 6, the third processor, that is, the recipient processor) further to determining that no further data has been received (e.g. has been stored in the (memory) buffer) for a third predetermined duration.

In one or more embodiments, the value of the third predetermined duration may be predefined based on one or more of the size of the (memory) buffer used by the second processor, the execution frequency of the task executed by the second processor, and the size of a shared RAM that may in some embodiments may be used for data transmission to the second processor.

In one or more embodiments, the value of the third predetermined duration may be predefined in relation with the value predefined for the first predetermined duration. As a consequence, the first predetermined duration and the third predetermined duration may be predefined to be related with each other, so that the first predetermined duration which is used by the first processor to trigger transmission of the received data by intermediary processors such as the second processor even though their transmission buffer is not full to a predetermined extent, and the third predetermined duration may be chosen based on one or more respective data processing capabilities and respective data communication capabilities of the first processor and intermediary processors such as the second processor.

As illustrated by Fig. 6, in some embodiments, the second processor may transmit the content of its (memory) buffer ("TaskFast penultimate buffer") to the third processor (14a) even though such (memory) buffer is not full to a predetermined extent further to determining that no further data was received from the first processor during the third predetermined duration.

In one or more embodiments, the second processor may use a timer to monitor data reception for the third predetermined duration. For example, in some embodiments, the second processor may be monitored for, upon determining that data is no longer being received (from the first processor), starting a receiver end of transmission timer which may be configured to expire at the end of the third predetermined duration.

In one or more embodiments, the second processor may be configured, for example through a buffer management rule (traffic management policy) executed by (the task "TaskFast" of) the second processor, to transmit data to the next (immediately following) processor of the chain of processors (in the exemplary case of Fig. 6, the third processor, that is, the recipient processor) pursuant to a buffer transmission rule under the condition that its (memory) buffer is not empty. Depending on the embodiment, the condition that the (memory) buffer is not empty may be configured and executed as a separate rule for data transmission to the next (immediately following) processor of the chain of processors, or may be integrated with one or more other data transmission rule(s), such as proposed in the present subject disclosure.

For example, in some embodiments, in a case where data received from the previous processor of the chain of processors is such that the (memory) buffer of the second processor is full to the predetermined extent that triggers transmission of the data contained (stored) in the (memory) buffer, the second processor may be configured to transmit the data contained (stored) in its (memory) buffer to the next processor. Further to the transmission of the data to the next (immediately following) processor of the chain of processors, the (memory) buffer of the second processor may be empty, and the second processor may not receive further data from the previous processor. In some embodiments, the second processor may monitor a third predetermined duration to determine whether further data is received during the third predetermined duration. In cases where no further data is received during the third predetermined duration, the second processor may have a (memory) buffer that stays empty during the third predetermined duration. Depending on the embodiment, the second processor may be configured with a rule of no data transmission in case the (memory) buffer is empty, which rule may be integrated with a rule of data transmission further to not having received data for a third predetermined duration (in which case the second processor may not attempt to empty its (memory) buffer after the third predetermined duration), or may not be integrated with the rule of data transmission further to not having received data for a third predetermined duration (in which case the second processor may attempt to empty its (memory) buffer after the third predetermined duration and such attempt may not be effective as data transmission may be conditioned by the buffer not being empty).

In one or more embodiments, the second processor may be configured for, further to transmitting the data stored in its (memory) buffer to the (immediately following) processor of the chain of processors (in the exemplary case of Fig. 6, the third processor, that is, the recipient processor) further to determining that no further data has been received (e.g. has been stored in the (memory) buffer) for the third predetermined duration, resuming its monitoring for data reception, for example in some embodiments monitoring data writing in a memory shared with its previous processor of the chain of processors, and storing received data in its (memory) buffer.

As described in relation with operations of the first processor (sender processor) in one or more embodiments, the first processor may be configured for, further to stopping data transmission to the third processor through the second processor for a first predetermined duration, transmitting to the third processor through the second processor (possibly through one or more other intermediary processors) one or more subsequent data (e.g. data packets) upon expiry of the first predetermined duration. In some embodiments, the first processor may be configured for, upon transmitting the one or more subsequent data (packets), stopping data transmission to the second processor for a second predetermined duration. In some embodiments, the one or more subsequent data may comprise data indicating to the third processor end of data transmission, such as for example a stop data packet as illustrated in Fig. 3b. Advantageously, the second predetermined duration may be used to trigger (force) transmission of data (that may comprise data indicating to the third processor end of data transmission) by any intermediate processor located in a transmission chain in-between the first processor (sender processor) and the recipient processor which applies a buffer management rule according to which no received data should be transmitted if its (memory) buffer is not full to a predetermined extent, so that the data may be transmitted along the chain of processors even if it is insufficient to fill the (memory) buffer of an intermediary processor in the chain to the predetermined extent configured for such intermediary processor.

Correspondingly, in some embodiments, the second processor may receive the one or more subsequent data transmitted by the first processor (sender processor). In some embodiments, receiving the subsequent data transmitted by the first processor may comprise storing the received subsequent data in its (memory) buffer. In some embodiments, the received subsequent data may not be sufficient to fill the (memory) buffer used by the second processor, so that the second processor may no trigger transmission of the data stored in its (memory) buffer.

In some embodiments, in correspondence with the first processor stopping data transmission to the third processor for a second predetermined duration, the second processor may not receive further data, beyond the received subsequent data, for a corresponding period of time.

In one or more embodiments, the second processor may be configured for upon (based on) determining that no data was received during a fourth predetermined duration, transmitting the received subsequent data stored in the memory to the third processor (even though the received subsequent data does not fill the (memory) buffer of the second processor to the predetermined extent configured for the second processor).

In some embodiments, the fourth predetermined duration may be configured relative to the second predetermined duration. In some embodiments, the fourth predetermined duration may be configured to be the same as the third predetermined duration. In such embodiments, advantageously, the second processor may be configured with a data transmission trigger rule according to which data transmission to the next processor of the chain of processors may be triggered (forced) upon determining that no further data was received for a predetermined duration (corresponding to the third predetermined duration and the fourth predetermined duration), so that the second processor may apply the same rule upon (based on) determining that no data was received from the first processor during the (third) predetermined duration, and upon (based on) determining that no data was received from the first processor during the (fourth) predetermined duration. In that way, as illustrated by the example of Fig. 6, the second processor may be configured to subsequently apply the same rule, leading to, further to receiving some data that does not fill its buffer to a predetermined extent and storing such received data in its buffer, transmit to the next processor in the chain of processor the data ("TaskFast penultimate buffer") received from the previous processor in the chain upon determining that no further data was received during a predetermined period configured for the second processor (even though its buffer is not full to the predetermined extent configured for the second processor), and then, further to receiving subsequent data that also does not fill its buffer to a predetermined extent (e.g. a stop data packet) and storing such received data in its buffer, to transmit to the next processor in the chain of processor the subsequent data ("TaskFast last buffer") received from the previous processor in the chain upon determining that no further data was received during the predetermined period configured for the second processor (even though its buffer is not full to the predetermined extent configured for the second processor).

In some embodiments, the third predetermined duration and the fourth predetermined duration may be configured not to be related to each other, so that the second processor may be configured to apply two different data transmission trigger rules, one configured with the third predetermined duration and the other configured with the fourth predetermined duration.

In some embodiments, an additional rule addressing the specific case where the buffer used by the second processor is empty further to the last data transmission to the following processor, may be applied independently from the data transmission trigger rule(s) or as incorporated in such rule(s), depending on the embodiment.

Advantageously, the second (intermediary) processor may be configured to transmit the last data of a transmission from the sender processor to the recipient processor (e.g. the last data packets of a stream of P data packets), and transmit data through which the sender processor indicates end of transmission to the recipient processor (e.g. a stop packet), without any need to process such data, while applying a general data transmission rule according to which data is to be transmitted to the next processor of the chain only upon determining that its (memory) buffer is full to a predetermined extent.

This general data transmission rule advantageously allows using a second processor with very limited data processing and data communication capabilities while optimizing CPU usage for the second processor. In particular, the proposed scheme avoids the need for implementing any loop at the second processor for managing and processing received data (for example for detecting start packets and/or stop packets). As a consequence, messages of the data transmission protocol (e.g. signaling messages, such as for example start and stop messages) used for data communication between the sender processor to the recipient processor may be completely transparent to the second (intermediary) processor.

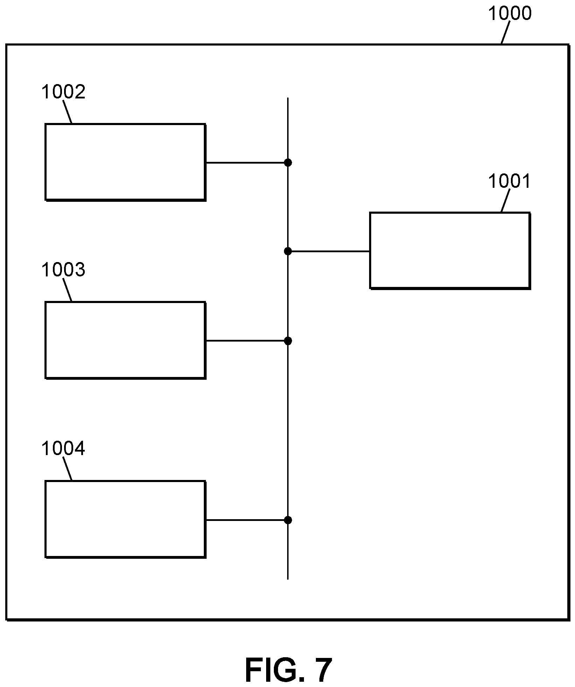

Fig. 7 illustrates an exemplary apparatus 1000 configured to use a data communication feature in accordance with embodiments of the present subject disclosure. For example, the apparatus 1000 may, depending on the embodiment, be configured to use one or more of a data communication feature between a first processor and a second processor by the first processor, and a data communication feature between a first processor and a second processor by the second processor. The apparatus 1000 may, depending on the embodiment, be comprised in an electronic circuit, an electronic board, an electronic component, chip, a CPU, or any other suitable data processing platform.

The apparatus 1000, which may comprise one or more processors, includes a control engine 1001, a communication interface engine 1002, a data communication engine 1003, and a memory 1004.

In the architecture illustrated on Fig. 7, all of the communication interface engine 1002, data communication engine 1003, and memory 1004 are operatively coupled with one another through the control engine 1001.

In one or more embodiments, the communication interface engine 1002 may be configured to perform various functions or embodiments provided in the present subject disclosure, including to provide a data interface to the apparatus 1000, including for exchanging data with another apparatus, including with respect to data communication between a first processor and a third processor, one or more of transmitting, by the first processor, data (e.g. data packets) to the third processor and receiving, by the second processor, for example from the first processor, data (e.g. one or more data packets). In some embodiments, the communication interface engine 1002 may be implemented in software and incorporated in a computing machine (e.g. a processor) configured according to embodiments of the present subject disclosure.

In one or more embodiments, the data communication engine 1003 may be configured to perform various functions or embodiments provided in the present subject disclosure, including with respect to one or more of: (1) by the first processor, stopping data transmission for a first predetermined duration upon determining that transmission of the data packets is to be stopped, and upon expiry of the first predetermined duration, transmitting to the third processor subsequent data (e.g. one or more subsequent data packets), and (2) by the second processor, storing the received data (e.g. the received one or more data packets) in a memory coupled to the second processor; and upon determining that no further data was received during a third predetermined duration, transmitting the data stored in the memory to a third processor. In some embodiments, the data communication engine 1003 may be implemented in software and incorporated in a computing machine (e.g. a processor) configured according to embodiments of the present subject disclosure

The control engine 1001 includes one or more processors, which may be any suitable microprocessor, microcontroller, Field Programmable Gate Arrays (FPGA), Application Specific Integrated Circuits (ASIC), Digital Signal Processing chip, and/or state machine, or a combination thereof. The control engine 1001 may also comprise, or may be in communication with, computer storage media, such as, without limitation, the memory 1004, capable of storing computer program instructions or software code that, when executed by the processor, causes the processor to perform the elements described herein. In addition, the memory 1004 may be any type of data storage computer storage medium, capable of storing multimedia content data, service data, service list data, customization data, personalization data and/or channel data for use according to one or more embodiments of the present subject disclosure, coupled to the control engine 1001 and operable with the data communication engine 1003and the communication interface engine 1002 to facilitate processing of data stored in association therewith.

In embodiments of the present subject disclosure, the apparatus 1000 is configured for performing one or more of the methods described herein.

It will be appreciated that the apparatus 1000 shown and described with reference to Fig. 7 is provided by way of example only. Numerous other architectures, operating environments, and configurations are possible. Other embodiments of the apparatus may include fewer or greater number of components and may incorporate some or all of the functionality described with respect to the apparatus components shown in Fig. 7. Accordingly, although the control engine 1001, data communication engine 1003, communication interface engine 1002, and memory 1004 are illustrated as part of the apparatus 1000, no restrictions are placed on the location and control of components 1001 - 1004. In particular, in other embodiments, components 1001 - 1004 may be part of different entities or computing systems.

While the invention has been described with respect to preferred embodiments, those skilled in the art will readily appreciate that various changes and/or modifications can be made to the invention without departing from the spirit or scope of the invention as defined by the appended claims.

Although this invention has been disclosed in the context of certain preferred embodiments, it should be understood that certain advantages, features and aspects of the systems, devices, and methods may be realized in a variety of other embodiments. Additionally, it is contemplated that various aspects and features described herein can be practiced separately, combined together, or substituted for one another, and that a variety of combination and sub-combinations of the features and aspects can be made and still fall within the scope of the invention. Furthermore, it is not necessary for the systems and devices described above to include all of the modules and functions described in the preferred embodiments.

Information and signals described herein can be represented using any of a variety of different technologies and techniques. For example, data, instructions, commands, information, signals, bits, symbols, and chips can be represented by voltages, currents, electromagnetic waves, magnetic fields or particles, optical fields or particles, or any combination thereof.

Depending on the embodiment, certain acts, events, or functions of any of the methods described herein can be performed in a different sequence, may be added, merged, or left out all together (e.g., not all described acts or events are necessary for the practice of the method). Moreover, in certain embodiments, acts or events may be performed concurrently rather than sequentially.

## Claims

1. A method for data communication between a first processor and a third processor, the method comprising, by the first processor:
transmitting data to the third processor;
upon determining that transmission of data is to be stopped, stopping data transmission to the third processor for a first predetermined duration; and
upon expiry of the first predetermined duration, transmitting to the third processor subsequent data.

2. The method according to claim 1, further comprising: upon transmitting the one or more subsequent data, stopping data transmission to the third processor for a second predetermined duration.

3. The method according to any of claims 1 - 2, wherein transmitting data to the third processor comprises transmitting a stream of P data packets to the second processor, wherein *P* ≥ 1; and wherein determining that the transmission of data is to be stopped comprises determining that the transmission of the P data packets of the stream is complete, and wherein the subsequent data comprises an end of transmission signaling packet

4. The method according to any of claims 1 - 3, further comprising: upon transmitting the one or more subsequent data packets, starting a transmitter stop transmission timer, wherein the transmitter stop transmission timer is configured to expire at the end of the second predetermined duration, wherein data transmission to the third processor is stopped while the transmitter stop transmission timer is running.

5. The method according to any of claims 1 - 4, wherein transmitting data to the third processor comprises writing the data to be transmitted to the third processor in a memory shared between the first processor and a second processor.

6. A method for data processing, the method comprising, by a second processor:
Receiving data;
Storing the received data in a memory coupled to the second processor; and
Upon determining that no further data was received during a third predetermined duration, transmitting the data stored in the memory to a third processor.

7. The method according to claim 6, further comprising: upon transmitting the data stored in the memory to the third processor, receiving subsequent data, and storing the received subsequent data in the memory, and upon determining that no further data was received during a fourth predetermined duration, transmitting the subsequent data stored in the memory to the third processor.

8. The method according to any of claims 6-7, further comprising: further to receiving the data, upon determining that data is no longer being received by the second processor, starting a first receiver stop transmission timer, wherein the first receiver stop transmission timer is configured to expire at the end of the third predetermined duration.

9. The method according to claim 8, further comprising: further to receiving the subsequent data, upon determining that data is no longer being received by the second processor, starting a second receiver stop transmission timer, wherein the second receiver stop transmission timer is configured to expire at the end of the fourth predetermined duration.

10. The method according to any of claims 6-9, further comprising: receiving data, storing received data in the memory, and upon determining that the memory is full to a predetermined extent, transmitting the data stored in the memory to a third processor.

11. The method according to claim 10, wherein the data stored in the memory is transmitted to the third processor upon determining that no further data was received during the third predetermined duration even though the memory is not full to the predetermined extent.

12. The method according to any of claims 6 - 11, wherein the second processor and the third processor are processors of a chain of processors for data transmission from a sender processor to a recipient processor, wherein the second processor is an intermediary processor of the chain of processors through which data is transmitted from the sender processor to the recipient processor.

13. The method according to any of claims 1 - 5, wherein the first processor and the third processor are processors of a chain of processors for data transmission from the first processor operating as a sender processor to the third processor operating as a recipient processor being the last processor of the chain of processors, wherein data transmitted from the first processor to the third processor are transmitted through one or more intermediary processors of the chain of processors.

14. An apparatus, the apparatus comprising a processor, and a memory operatively coupled to the processor, wherein the apparatus is configured to perform a method according to any of claims 1 to 13.

15. A computer program product comprising computer program code tangibly embodied in a computer readable medium, said computer program code comprising instructions to, when provided to a computer system and executed, cause said computer to perform a method according to any of claims 1 to 13.
